# EUROPÄISCHE PATENTSCHRIFT

(11) **EP 2 891 235 B1**
(45) Veröffentlichungstag und Bekanntmachung des Hinweises auf die Patenterteilung: **22.01.2020**
(21) Anmeldenummer: 13815133.7
(22) Anmeldetag: 30.08.2013
(51) Int. Cl.: H02K 21/24, H02K 1/14, H02K 1/27, H02K 16/04

(54) **ELEKTROMECHANISCHER WANDLER**
ELECTROMECHANICAL TRANSDUCER
CONVERTISSEUR ÉLECTROMÉCANIQUE

(30) Priorität: 31.08.2012 DE 102012108099
(43) Veröffentlichungstag der Anmeldung: 08.07.2015
(73) Patentinhaber: LEANTEC Motor GmbH, 07318 Saalfeld/Saale (DE)
(72) Erfinder: LENZ, Rainer, 22145 Hamburg (DE); KELLER, Torsten, 07318 Saalfeld (DE); SCHMIDT, Sven, 08412 Werdau (DE); BARTSCH, Thomas, 09350 Lichtenstein (DE); HENNIG, Philip, 06886 Lutherstadt Wittenberg (DE); BRAUNE, Erik, 08058 Zwickau (DE); HOHMUTH, Maik, 04600 Altenburg (DE)
(74) Vertreter: Steiniger, Carmen
(86) Internationale Anmeldenummer: PCT/IB2013/058154
(87) Internationale Veröffentlichungsnummer: WO 2014/033677

(56) Entgegenhaltungen:
- EP-B1- 2 255 431
- WO-A2-02/056443
- AT-A1- 505 839
- US-A1- 2012 119 599

## Beschreibung

Die vorliegende Erfindung betrifft einen elektromechanischen Wandler mit wenigstens einem scheiben- oder ringförmigen Rotor, in und/oder auf dem Permanentmagnete konzentrisch strahlenförmig angeordnet sind, und wenigstens zwei beidseitig des Rotors vorgesehenen Statoren, wobei die Statoren zumindest teilweise aus weichmagnetischem Material gefertigt sind; jeder Stator einen ersten Statorabschnitt mit radial außen liegenden Tragebalken für dem Rotor gegenüber liegende erste magnetische Aktivflächen des Stators und einen zweiten Statorabschnitt mit radial innen liegenden Tragebalken für dem Rotor gegenüber liegende zweite magnetische Aktivflächen des Stators aufweist; zwischen diesen Statorabschnitten eine ringförmige Wicklungsnut zur Aufnahme wenigstens einer Wicklung vorgesehen ist; die Tragebalken jeweils ringförmig angeordnet sind und sich jeweils parallel zur Rotorachse in Richtung des Rotors erstrecken; die magnetischen Aktivflächen der Statoren Stirnflächen von voneinander gleichmäßig beabstandeten, in Richtung des Rotors von den Tragebalken vorstehenden Auskragungen sind; die jeweils an den radial außen liegenden Tragebalken vorgesehenen Auskragungen bezüglich des Auskragungsabstandes um ein halbes Teilungsmaß gegenüber den jeweils an den radial innen liegenden Tragebalken vorgesehenen Auskragungen winkelversetzt sind, und bei wenigstens einem der Statoren die an den radial außen liegenden Tragebalken vorgesehenen Auskragungen und/oder die an den radial innen liegenden Tragebalken vorgesehenen Auskragungen die Wicklungsnut in radialer Ausrichtung wenigstens teilweise übergreifen, sodass die Wicklungsnut zwischen Statorrücken, von welchen die Tragebalken gehalten werden, den Tragebalken und den Auskragungen ausgebildet ist, und wobei zwischen den Auskragungen jeweils ein sich parallel zur Umfangsrichtung des Rotors erstreckender Luftspalt vorgesehen ist.

Aus der Druckschrift EP 2 255 431 B1 ist ein elektromechansicher Wandler bekannt, der eisenlose, scheibenförmige Rotoren besitzt, welche in einem konzentrischen Kreis einreihig angeordnete Permanentmagnete tragen. Beidseitig der Rotorscheiben sind kreisringförmige Statoren angeordnet. Die Seiten der Statoren, die dem Rotor gegenüber liegen, weisen radial außen liegende und radial innen liegende, jeweils genutete Grenzflächen auf. Diese Grenzflächen sind gegeneinander bezüglich der Nutteilung um ein halbes Maß zueinander winkelversetzt angeordnet. Darüber hinaus sind die radial außen und die radial innen liegenden Grenzflächen durch eine umlaufende Ringnut voneinander getrennt. In der Ringnut sind die Wicklungen angeordnet, welche bei beiden, beidseitig des Rotors angeordneten Statoren mit gleich gerichteter Polung elektrisch kontaktiert sind.

Die Rotoren sind aus einem eisenlosen, amagnetischen Material ausgebildet und mit den Permanentmagneten derart bestückt, dass die Verbindungslinie der magnetischen Nord- und Südpole der Permanentmagnete in Umfangsrichtung zeigt und sich benachbarte Permanentmagnete abstoßen.

Der bekannte Direktantrieb zeichnet sich durch eine axial kurze Baulänge und eine hohe Gleichförmigkeit des Drehmomentes bei hohen spezifischen Drehmomenten aus. Problematisch ist jedoch die relativ aufwändige Herstellungstechnologie, bei welcher die einzelnen Permanentmagnete in den Rotor geeignet eingebracht werden müssen. Zudem ist die Effizienz des bekannten Direktantriebes nicht optimal, da die Verwendung eisenloser Permanentmagnete hier von Nachteil ist und zu einer geringeren Kraftdichte führt.

Die Druckschrift DE 29 13 691 A1 offenbart einen Elektromotor, der acht etwa U-förmige lamellierte Polschuhe besitzt, die rittlings auf einer etwa quadratischen Ständerwicklung mit abgerundeten Ecken sitzen. Die Schenkel der ungeradzahligen Polschuhe sind gleich lang und ragen radial nach innen. Die Schenkel der geradzahligen Polschuhe sind ebenfalls gleich lang und ragen radial nach außen. Beidseitig des Ständers sind Läuferscheiben aus ferromagnetischem Material angeordnet. Auf den den Stirnflächen der Polschuhe des Ständers zugekehrten Radialseiten der Läuferscheiben sind in gleichen Winkelabständen einander abwechselnde Nord- und Südpole mittels Dauermagneten ausgebildet. Die oberen und unteren U-Seiten der Polschuhe übergreifen die Ständerwicklung klauenförmig in radialer Ausrichtung.

Nachteilig ist an dem Elektromotor der Druckschrift DE 29 13 691 A1, dass hier nur einseitig Kräfte auf die vorgesehenen Rotorscheiben wirken. Das vorgestellte Motorprinzip wird daher seit vielen Jahren nicht mehr verwendet.

Aus der Druckschrift DE 103 22 474 A1 ist ferner eine elektrische Maschine der oben genannten Gattung bekannt, die in Axialflussweise als Scheibenläufer ausgebildet ist. Der Stator dieser elektrischen Maschine weist eine Polscheibe mit vom Statorumfang und von der Statormitte ausgehenden, ineinander greifenden, trapezförmigen, flachen Polsegmenten auf. Dabei werden die nach innen ausgerichteten Polsegmente durch einen äußeren Hohlzylinder und die nach außen gerichtete Polsegmente von einem in der Statormitte, also auf der Verlängerung der Drehachse der Maschine liegenden, zentralen Vollzylinder verbunden und gehalten. Die äquidistanten Polsegmente bestehen aus magnetisch leitfähigem Material und sind so angeordnet, dass in Umfangsrichtung ein nach außen gerichtetes Polsegment auf ein nach innen gerichtetes Polsegment folgt. Rückseitig des Stators ist ein Rückschlussjoch vorgesehen, das den äußeren Verbindungshohlzylinder mit dem zentralen Verbindungsvollzylinder verbindet. Zwischen Rückschlussjoch und der Polscheibe ist eine als Ringspule ausgeführte Erregerwicklung koaxial zu Rückschlussjoch und Polscheibe angeordnet.

Der Rotor der bekannten Maschine besitzt einen scheibenförmigen Rotorkörper, dessen dem jeweiligen Stator zugekehrte Scheibenfläche vollflächig mit aneinander angrenzenden Permanentmagneten besetzt ist. Die Magnetisierungsrichtung ist in in Umfangsrichtung aufeinanderfolgenden Permanentmagneten gegensinnig.

In einer ersten Ausführungsform weist diese elektrische Maschine einen Rotor und nur einen Stator auf. Um Lagerprobleme durch die auf den Rotor wirkenden elektromagnetischen Kräfte zu vermeiden, ist die elektrische Maschine in einer verbesserten Ausführungsform symmetrisch aufgebaut, wobei beidseitig des Rotors Statoren vorgesehen sind.

Die bekannte elektrische Maschine besitzt nur wenige Pole. Da sich bei der elektrischen Maschine die Statorpolsegmente jeweils nahezu über den gesamten Radius des Stators erstrecken, ist die Polanzahl auch geometrisch begrenzt, sodass sich die bekannte elektrische Maschine nicht für hohe spezifische Drehmomente eignet. Zudem sind bei einem symmetrischen Aufbau der bekannten elektrischen Maschine die Permanentmagneten auf beiden Scheibenseiten des Rotors anzuordnen, beispielsweise aufzukleben, wodurch der Rotor relativ schwer wird. Alternativ kann bei der bekannten elektrischen Maschine auch die gesamte Rotorscheibe aus Magnetmaterial ausgebildet sein.

Aus der Druckschrift DE 298 14 964 U1 ist ferner ein Generator vom Rotationstyp bekannt, der ebenfalls der oben aufgeführten Gattung zugeordnet werden kann. Der Generator ist zur Befestigung an einer Nabe eines Fahrrades vorgesehen. Der bekannte Generator weist einen magnetischen Rotor auf, der aus einer Anzahl aneinander angrenzender, einander in der Polarität abwechselnder Permanentmagneten zu einem Rotorring zusammengesetzt ist. Der Rotor wird durch die käfigförmig ausgebildete Nabe von außen gehalten und mit der rotierenden Nabe mitgedreht, wodurch sich ein Außenläuferprinzip ergibt. Die Nabe ist auf eine Welle aufgesetzt, deren beide Enden an einem Fahrradrahmen befestigt sind. Die Welle ist durch ein Durchgangsloch des Rotors hindurchgeführt.

Beidseitig des Rotors sind Statorelemente vorgesehen, die jeweils eine Wicklung umschließen. Jedes der Statorelemente hat einen ringförmigen inneren Rahmen, von welchem sich zueinander beabstandete, schwalbenschwanzförmige erste Statorpolsegmente radial nach außen erstrecken, sowie einen ringförmigen äußeren Rahmen, von dem sich zueinander beabstandete, schwalbenschwanzförmige zweite Statorpolsegmente radial nach innen erstrecken und in dem der innere Rahmen mit den daran vorgesehenen ersten Statorpolsegmenten aufgenommen wird. Die Anzahl der ersten Statorpolsegmente ist gleich der Anzahl der zweiten Statorpolsegmente. Zudem sind die Statorpolsegmente und deren Abstände so ausgebildet, dass die ersten Statorpolsegmente in die Abstände zwischen den zweiten Statorpolsegmente eingreifen, ohne einander zu kontaktieren, und umgekehrt. Die Wicklung befindet sich jeweils in dem Raum zwischen dem inneren und dem äußeren Rahmen. Dieser Generator weist ebenfalls nur wenige Pole auf und ist damit nicht für hohe Drehmomente vorgesehen. Der aus einzelnen Permanentmagneten zusammengesetzte Rotor ist auch nicht zur Aufnahme hoher Kräfte geeignet.

Weitere Transversalflussmaschinen sind in AT 505 839 A1 und US 2012/0119599 A1 offenbart.

Es ist die Aufgabe der vorliegenden Erfindung, einen elektromechanischen Wandler der oben genannten Gattung mit erhöhter Effizienz und technologisch einfacher Herstellbarkeit zur Verfügung zu stellen.

Die Aufgabe wird durch einen elektromechanischen Wandler mit den Merkmalen des Anspruchs 1 gelöst, bei welchem der Radius, in welchem die radial innen liegenden Tragebalken von der Drehachse des elektromechanischen Wandlers beabstandet sind, größer als die radiale Ausdehnung der magnetischen Aktivflächen der Statoren ist.

Während bei dem in der Druckschrift EP 2 255 431 B1 offenbarten Direktantrieb die radial außen und radial innen angeordneten magnetisch aktiven Grenzflächen der Statoren durch die Wicklungsnut voneinander getrennt sind, ragen die Auskragungen der Statoren des erfindungsgemäßen elektromechanischen Wandlers über die Wicklungsnut. Damit sind die magnetischen Aktivflächen des elektromechanischen Wandlers der vorliegenden Erfindung deutlich größer als in der Druckschrift EP 2 255 431 B1. Entsprechend kann ein höherer magnetischer Fluss zwischen Stator und Rotor und damit auch eine erhöhte Kraftdichte im Vergleich zu dem bekannten elektromechanischen Wandler erzielt werden.

Zudem sind bei dem erfindungsgemäßen elektromechanischen Wandler die radial außen und radial innen angeordneten magnetisch aktiven Grenzflächen der Statoren bzw. die von den Tragebalken ausgehenden Auskragungen, in einem deutlich Abstand zu der Drehachse des Rotors vorgesehen. Die radial außen und radial innen angeordneten magnetisch aktiven Grenzflächen der Statoren bilden dabei einen von der Drehachse beabstandeten Kreisring um die Drehachse des elektromechanischen Wandlers aus. Diese Anordnung erlaubt es, entlang des Kreisringes eine Vielzahl von Statorpolsegmenten in Umfangsrichtung nebeneinander anzuordnen, die entsprechend vielen Permanentmagneten des Rotors gegenüber sind. Der erfindungsgemäße elektromechanische Wandler kann daher sehr hochpolig ausgebildet werden.

Erfindungsgemäß bilden die radial innen liegenden Tragebalken des Stators eine Hohlwelle um die Drehachse des Rotors aus. Auch der Rotor ist vorzugsweise ringförmig mit einem entsprechend der Größe des Statorinnenhohlraums ausgebildeten Innenloch, also als Hohlwelle, vorgesehen. Damit kann der Innenhohlraum des elektromechanischen Wandlers zum Beispiel im mobilen Anwendungsbereich für eine Unterbringung eines Getriebes und/oder einer Bremseinrichtung oder beispielsweise im stationären Anwendungsbereich für eine Leitungs- und/oder Werkstückzuführung genutzt werden.

Dadurch, dass erfindungsgemäß zwischen den Auskragungen jeweils ein sich parallel zur Umfangsrichtung des Rotors erstreckender Luftspalt vorgesehen ist, ist gewährleistet, dass die einander gegenüber befindlichen Auskragungen einander nicht berühren und somit keinen magnetischen Kurzschluss verursachen.

In einer favorisierten Ausführungsform des erfindungsgemäßen elektromechanischen Wandlers sind in Umfangsrichtung des wenigstens einen Rotors zwischen den Permanentmagneten oder zwischen jeweils einen Nordpol und einen Südpol aufweisenden Permanentmagnetpaaren radial verlaufende Stege aus festem, amagnetischen Material vorgesehen. Bei dem vorgeschlagenen Rotor wird, anders als im Stand der Technik, kein magnetisches Material im Verbund verwendet. Die zwischen den Permanentmagneten oder den Permanentmagnetpaaren vorgesehenen nichtmagnetische Stege sorgen für Zwischenversteifungen aus nichtmagnetischem Material. Dieses nichtmagnetische Material kann so ausgewählt werden, dass es eine im Vergleich zu dem magnetischen Material der Permanentmagneten erhöhte mechanische Beanspruchbarkeit besitzt. Durch die amagnetischen Stege kann somit die Gesamtstabilität des Rotors bedeutend heraufgesetzt werden, ohne dass die Permanentmagneten auf eine versteifende Trägerplatte aufgeklebt werden müssen. Damit kann der erfindungsgemäße Wandler mit geringem Rotorgewicht ausgebildet und trotzdem zur Herstellung großer Motoren mit hoher Leistungsdichte genutzt werden.

Besonders vorteilhaft ist es, wenn die Permanentmagneten oder die Permanentmagnetpaare zueinander beabstandet in einen amagnetischen Rotorgrundträger, wie beispielsweise einen Rotorgrundträger aus faserverstärktem Kunststoff, eingebunden sind. Mit einer solchen Anordnung können die Permanentmagneten so angeordnet werden, dass ihre magnetisch aktiven Flächen auf beiden Seiten des Rotorgrundträgermaterials wirksam sind, also nicht auf beiden Seiten des Rotorgrundträgers Permanentmagnete aufgeklebt werden müssen. Dadurch wird der Rotor insgesamt sehr leicht und ist dennoch bei Wahl eines geeigneten Rotorgrundträgermaterials und bei Vorsehen entsprechender amagnetischer Zwischenversteifungen zwischen den Permanantmagneten oder Permanentmagnetpaaren hochstabil.

In einer bevorzugten Ausführungsform des erfindungsgemäßen elektromechanischen Wandlers sind der erste Statorabschnitt und der zweite Statorabschnitt separat voneinander ausgebildete Statorsegmente. Diese Art der konstruktiven Gestaltung erleichtert die technologische Fertigung der Statoren des erfindungsgemäßen elektromechanischen Wandlers. Somit können der erste und der zweite Statorabschnitt mit Statorrücken, Tragebalken und Auskragungen separat voneinander hergestellt und nachfolgend geeignet montiert werden. Zudem können die beiden Statorabschnitte mit unterschiedlichen magnetischen Eigenschaften zur Verfügung gestellt werden.

Gemäß einer Ausbildungsvariante des erfindungsgemäßen elektromechanischen Wandlers sind die Auskragungen in Form von die Wicklungsnut zumindest teilweise übergreifenden Auskragungszähnen vorgesehen. Die Zahnform der Auskragungen hat sich besonders bewährt. Dabei wird am Zahnrücken der Auskragungszähne die jeweilige magnetische Aktivfläche, die der Rotoroberfläche gegenübersteht, vorzugsweise flächig ausgebildet, während der Zahnspitzenbereich die Wicklungsnut übergreift. Der Zahnspitzenbereich kann so ausgestaltet werden, dass Wicklungen mit geeigneter Größe und Anzahl in der Wicklungsnut platziert werden können.

Werden beispielsweise die Auskragungszähne so gestaltet, dass sie eine sich zumindest über der Wicklungsnut keilförmig verringernde Dicke parallel zur Rotorachse aufweisen, wird der Platz für die Wicklungen in der Wicklungsnut effektiv vergrößert.

Ferner ist es vorteilhaft, wenn die Auskragungszähne eine sich zumindest in ihrer radialen Erstreckung über der Wicklungsnut trapezförmig verringernde Breite aufweisen. Hierdurch wird ein geeignet großer Luftspalt zwischen den Auskragungen in Umfangsrichtung eingestellt.

In einer einfachen Ausführungsform der Erfindung ist die Stirn bzw. der Zahnspitzenbereich, der der Rotoroberfläche, in bzw. auf welcher die Permanentmagneten vorgesehen sind, gegenüber ist, flach ausgebildet. Um bestimmte gewünschte Flussdichten zu erzielen, kann es jedoch auch günstig sein, wenn die Auskragungszähne zum Rotor hin abgerundet ausgeführt sind, wobei die magnetisch aktiven Flächen der Auskragungszähne ein in Umfangsrichtung des Rotors verlaufendes, also in Umfangsrichtung des Rotors ansteigendes und absteigendes, Wölbungsprofil aufweisen. Die Abrundung bzw. Wölbung der zum Rotor hin weisenden Stirnkante bzw. Stirnfläche der Auskragungszähne kann, je nach Anwendung, konvex oder konkav ausgebildet sein. Eine zum Rotor hin konkave Ausbildung der Stirn der Auskragungszähne eignet sich dann, wenn an die querverlaufende Wicklung rechteckförmige Wellen angelegt werden, dagegen ist die konvexe Ausbildung der Stirn der Auskragungszähne dann von Vorteil, wenn eine sinusförmige Anregung der Wicklung zum Einsatz kommt.

In einer besonders hocheffizienten Bauform des erfindungsgemäßen elektromechanischen Wandlers setzen sich der erste Statorabschnitt und der zweite Statorabschnitt aus einzelnen Statorklauen zusammen, wobei an jeder der Statorklauen eine der Auskragungen vorgesehen ist, welche die Wicklungsnut abwechselnd von radial außen und von radial innen übergreifen. Bei dieser Ausführungsform bilden somit die Tragebalken keinen in sich geschlossenen Ring, sondern sind jeweils separat voneinander ausgebildet. Jede der Statorklauen besitzt einen Klauenrücken, der einen Bestandteil des Statorrückens ausbildet, einen Tragebalken und eine Auskragung, wobei Klauenrücken und Auskragung im Wesentlichen parallel zueinander ausgerichtet sind, sodass jede der Statorklauen bügelförmig bzw. klemmenförmig um die Wicklungsnut platziert werden kann. Die Statorklauen sind so wechselseitig einander gegenüber angeordnet, dass die Auskragungen kammförmig ineinander greifen, ohne einander zu berühren. Dabei wird im Zwischenraum zwischen den Klauenrücken, den Tragebalken und den Auskragungen die Wicklungsnut ausgebildet. Diese Ausführungsform ist besonders einfach technologisch umsetzbar, da jede der Statorklauen separat auf einfache Weise gefertigt werden kann und die Statorklauen nachfolgend, ebenfalls auf einfache Weise, ringförmig unter Ausbildung eines Stators verbunden werden können.

Der erfindungsgemäße elektromechanische Wandler besitzt vorzugsweise einen Rotorgrundträger, in oder auf welchem die Permanentmagnete des Rotors vorgesehen sind. Der Rotorgrundträger kann in der vorliegenden Erfindung sowohl aus eisenhaltigem als auch aus eisenlosem Material ausgebildet sein. Eine Einschränkung auf nicht eisenhaltige Materialien ist hier nicht notwendig.

Bei dem erfindungsgemäßen elektromechanischen Wandler können die in dem Rotor vorgesehenen Permanentmagnete aus Eisenwerkstoffen oder aus Nichteisenwerkstoffen ausgebildet sein. Der Vorteil der Verwendung von Permanentmagneten aus Eisenwerkstoffen besteht in der höheren erzielbaren Energiedichte, die beispielsweise bei Einsatz von Neodym-Eisen-Bor als Werkstoff für die Permanentmagneten höher als bei allen Nichteisenwerkstoffen ist. Dagegen haben bestimmte Nichteisenwerkstoffe Vorteile bei höheren Temperaturen, da deren Curiepunkt teilweise höher als der von eisenhaltigen Werkstoffen liegt.

In einer bevorzugten Ausgestaltung des erfindungsgemäßen elektromechanischen Wandlers sind die Permanentmagnete mit einander in Umfangsrichtung des Rotors abwechselnden Nord- und Südpolen in und/oder auf dem Rotor angeordnet. Somit stoßen sich bei dieser Ausführungsform die Permanentmagneten in dem Rotor nicht in Umfangsrichtung des Rotors ab, wie dies beispielsweise in dem Direktantrieb der Druckschrift EP 2 255 431 B1 der Fall ist. Durch die abwechselnde Nord- und Südpolanordnung in dem erfindungsgemäß gestalteten Rotor kann der magnetische Fluss direkt in axialer Richtung ausgehend von den Auskragungen eines Stators über den Nord- und den Südpol der Permanentmagneten im Rotor zu den Auskragungen des auf der anderen Seite des Rotors liegenden Stators geleitet werden. Durch den gerade in Axialrichtung verlaufenden Flussverlauf können parasitäre Streufelder minimiert werden. Insbesondere wird durch die andere Magnetanordnung mit der Polarisierung in Flussrichtung der Magnetfluss gebündelt und zudem verkürzt. Dagegen ist durch die Permanentmagnetanordnung in dem Direktantrieb der Druckschrift EP 2 255 431 B1 ein Flussverlauf gegeben, der sich vom Stator zum Rotor zunächst axial, im Rotor in Umfangsrichtung des Rotors und daraufhin vom Rotor zum weiteren Stator wieder axial verläuft, womit Effizienzeinbußen verbunden sind.

Besonders von Vorteil ist es hierbei, wenn die elektrische Anschlusspolung der Wicklungen der beidseitig des Rotors vorgesehenen Statoren zueinander entgegengesetzt ist. Bei dieser Form der Bestromung erhalten die beiden Statorabschnitte eines Stators bzw. die diesen Statorabschnitten zugehörigen Statorklauen eine unterschiedliche Polarität. Das heißt, dass dann, wenn die Statorabschnitte aus einzelnen Statorklauen zusammengesetzt sind, die jeweils nebeneinander angeordneten Auskragungen der Statorklauen jeweils zueinander entgegengesetzte magnetische Pole aufweisen. Die magnetische Wirkung der Statorklauen führt zu zusätzlichen Krafteinwirkungen auf den Rotor, wodurch die Effizienz des erfindungsgemäßen elektromechanischen Wandlers noch weiter erhöht werden kann.

Die abwechselnde Anordnung von Nord- und Südpolen in dem Rotor besitzt ferner den Vorteil, dass in einem weiteren Konstruktionsbeispiel des erfindungsgemäßen elektromechanischen Wandlers der Rotor aus einem magnetischen Werkstoff und die Permanentmagnete in dem Rotor auf unkomplizierte Weise durch Magnetisierung des magnetischen Werkstoffes ausgebildet werden können. Die Magnetisierung kann beispielsweise durch Anlegen entsprechender Klemmen einer Magnetisiervorrichtung am äußeren und am inneren Rand eines ringförmigen Rotors erfolgen. Mit einer solchen Anordnung entfällt das aufwändige Bestücken des Rotors mit Einzelpermanentmagneten, sodass der erfindungsgemäße elektromechanische Wandler technologisch einfacher und damit auch kostengünstiger herstellbar ist.

In einer bevorzugten Ausbildung ist der elektromechanische Wandler nach einem Innenläuferprinzip, das heißt, mit wenigstens einem, an einer zentralen, drehbaren Welle des elektromechanischen Wandlers befestigten Rotor, ausgebildet.

In einer zweckmäßigen Ausgestaltung der Erfindung sind die Statoren in Umfangsrichtung des elektromechanischen Wandlers segmentiert ausgebildet. Diese Ausbildung vereinfacht es, um jeden Stator eine separate Wicklung vorzusehen und damit den elektromechanischen Wandler mehrphasig zu betreiben.

Bevorzugte Ausführungsformen der vorliegenden Erfindung, deren Aufbau, Funktion und Vorteile werden im Folgenden anhand von Figuren näher erläutert, wobei
- Figur 1: schematisch einen Ausschnitt aus einer Ausführungsform eines erfindungsgemäßen elektromechanischen Wandlers in einer perspektivischen Ansicht zeigt;
- Figur 2: schematisch einen Ausschnitt aus einer weiteren Ausführungsform des erfindungsgemäßen elektromechanischen Wandlers mit einer kaskadenförmig ausgebildeten Zweifach-Stator-Rotor-Stator-Anordnung in einer perspektivischen Ansicht zeigt;
- Figur 3: schematisch den Verlauf des magnetischen Flusses bei den in den Figuren 1 und 2 gezeigten Ausführungsformen des elektromechanischen Wandlers zeigt;
- Figur 4: schematisch im Vergleich zu Figur 3 den magnetischen Flussverlauf entsprechend der Druckschrift EP 2 255 431 B1 zeigt;
- Figur 5: schematisch eine perspektivische Ansicht einer weiteren Ausführungsform des erfindungsgemäßen elektromechanischen Wandlers zeigt;
- Figur 6: schematisch einen Rotor der Ausführungsform von Figur 5 in einer perspektivischen Draufsicht zeigt;
- Figur 7: schematisch in einer perspektivischen Ansicht einen Ausschnitt des elektromechanischen Wandlers von Figur 1 zeigt, in welchem exemplarisch zwei einander gegenüber angeordnete Statorklauen und die durch diese Statorklauen verlaufende Wicklung dargestellt sind;
- Figur 8: schematisch in einer perspektivischen Draufsicht einen Stator des elektromechanischen Wandlers aus Figur 1 mit durch den Stator verlaufenden Wicklungen zeigt;
- Figur 9: schematisch eine Detaildarstellung des elektromechanischen Wandlers aus Figur 1 zeigt, wobei exemplarisch beidseitig des Rotors vorgesehene einzelne Statorklauen und eine jeweils durch die Statorklauen eines Stators verlaufende Wicklung gezeigt sind und wobei der Übersichtlichkeit halber die weiteren Statorklauen des Stators weggelassen wurden;
- Figur 10: schematisch eine weitere Ausführungsvariante des erfindungsgemäßen elektromechanischen Wandlers mit einer Kaskadenanordnung aus Stator, Rotor und Stator in einer perspektivischen Ansicht zeigt;
- Figur 11: schematisch noch eine Ausführungsform des erfindungsgemäßen elektromechanischen Wandlers mit einer Dreifach-Kaskadenanordnung aus Stator, Rotor und Stator in einer perspektivischen Ansicht zeigt; und
- Figur 12: schematisch eine nach dem Innenläuferprinzip ausgebildete Rotoranordnung gemäß einer Ausführungsform des erfindungsgemäßen elektromechanischen Wandlers veranschaulicht.

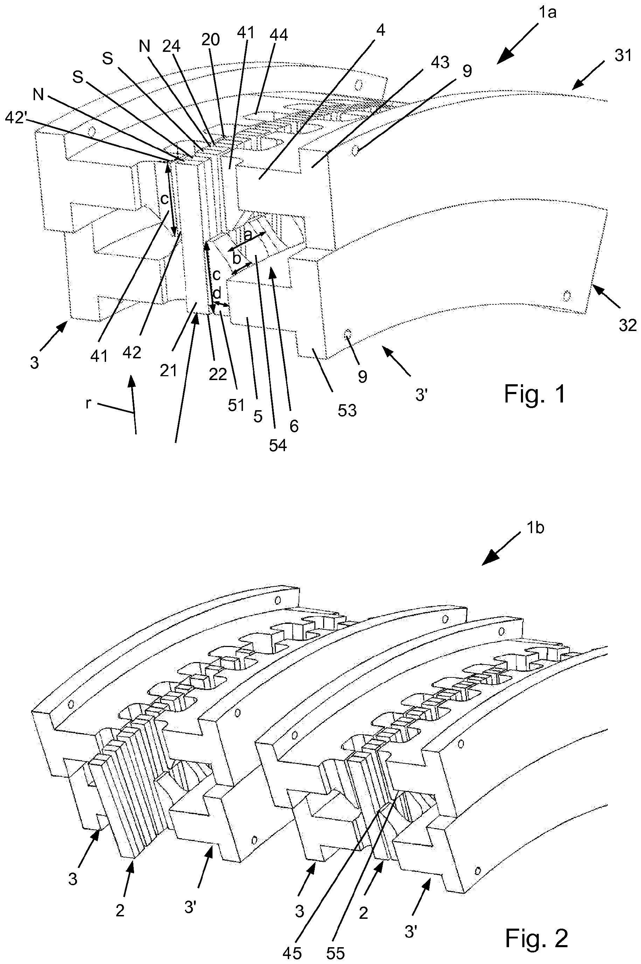

Figur 1 zeigt schematisch einen Ausschnitt aus einer Ausführungsform eines erfindungsgemäßen elektromechanischen Wandlers 1a. Die Details des elektromechanischen Wandlers 1a sind in Figur 1 in perspektivischer Ansicht dargestellt.

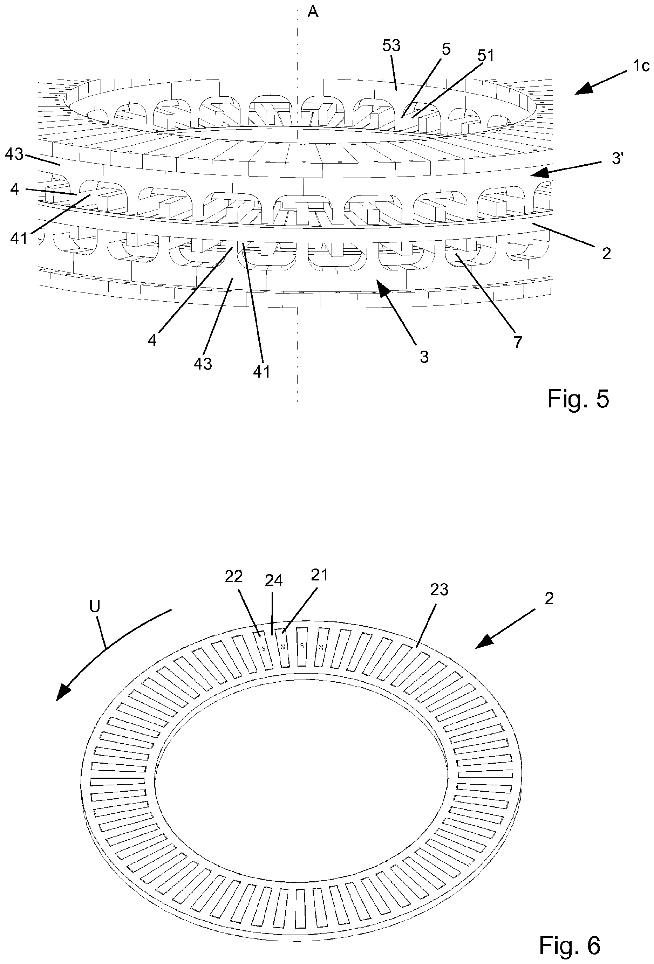

Der elektromagnetische Wandler 1a weist einen Rotor 2 auf, von dem in Figur 1 lediglich in dem Rotor 2 vorgesehene Permanentmagneten 21, 22 dargestellt sind. Die Permanentmagneten 21, 22 sind in einem in Figur 1 nicht, aber in Figur 6 dargestellten Rotorgrundträger 23 vorgesehen und in dem Rotorgrundträger 23 ringförmig angeordnet.

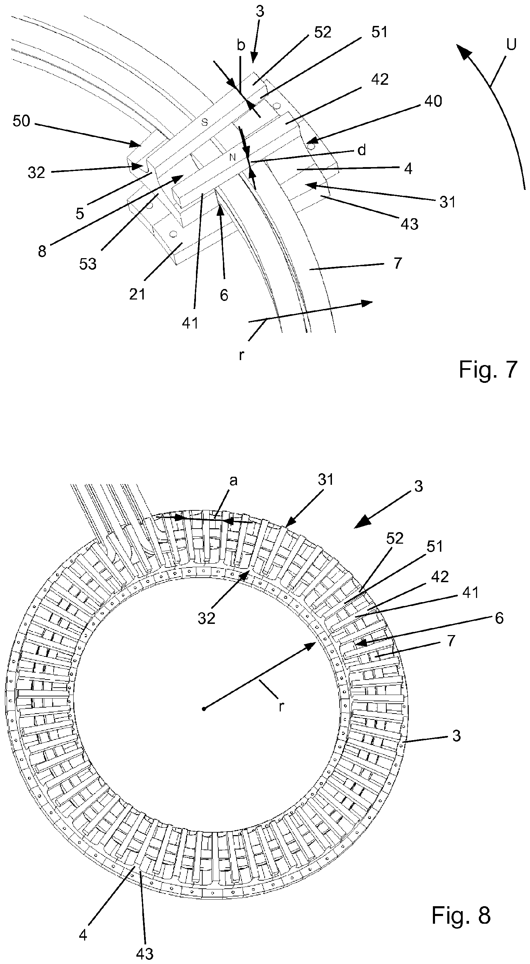

Der Rotor 2 ist um eine Rotorachse rotierbar, die der in Figur 7 dargestellten Drehachse A des elektromagnetischen Wandlers 1c entspricht. Die Permanentmagneten 21, 22 sind in radialer Ausrichtung r des Rotors 2 stern- bzw. strahlenförmig in dem Rotor 2 vorgesehen. Die Nordpole N und Südpole S der Permanentmagneten 21, 22 sind in dem gezeigten Ausführungsbeispiel dabei so angeordnet, dass jeweils nebeneinander vorgesehene Permanentmagneten 21, 22 einander abstoßen.

In den Ausführungsbeispielen von Figur 1 und Figur 2 sind die Permanentmagneten 21, 22 in Form von Permanentmagnetpaaren 20, die jeweils einen Nordpol N und einen Südpol S umfassen, die direkt aneinander angeordnet sind, angeordnet. In den Ausführungsformen von Figur 1, 2 und 6 sind die Permanentmagnetpaare 20 als auch die Permanentmagnete 21, 22 jeweils voneinander beabstandet vorgesehen. Zwischen den Permanentmagnetpaaren 20 bzw. zwischen den Permanentmagneten 21, 22 sind jeweils amagnetische, sich in radialer Ausrichtung zwischen den Permanentmagnetpaaren 20 bzw. zwischen Permanentmagneten 21, 22 erstreckende Stege 24 vorgesehen. Die aus amagnetischem Material, wie beispielsweise aus faserverstärktem Kunststoff, bestehenden Stege 24 bilden Zwischenversteifungen des Rotors 2 zwischen den permanentmagnetischen Bereichen aus. In anderen, nicht gezeigten Varianten des erfindungsgemäßen elektromechanischen Wandlers können die Stege 24 auch weggelassen werden.

Beidseitig des Rotors 2 sind Statoren 3, 3' vorgesehen. Die Statoren 3, 3' sind jeweils in gleichem Abstand zu dem Rotor 2 unter Ausbildung eines Doppelluftspaltes zwischen Stator 3, 3' und Rotor 2 vorgesehen. Die Statoren 3, 3' sind zumindest teilweise aus weichmagnetischem Material gefertigt.

Jeder der Statoren 3, 3' hat einen ersten, radial außen angeordneten Statorabschnitt 31 und einen zweiten, radial innen, in einem radialen Abstand zu der Drehachse A des elektromechanischen Wandlers 1a angeordneten Statorabschnitt 32. Die Statorabschnitte 31, 32 sind separat voneinander ausgebildete und nachfolgend geeignet in dem elektromechanischen Wandler 1a angeordnete und gegebenenfalls miteinander verbundene Segmente der Statoren 3, 3'. Jeder der Statoren 31, 32 weist einen Statorrücken 43, 53 auf. Von den Statorrücken 43, 53 erstrecken sich axial in Richtung des Rotors 2 Tragebalken 4, 5. Die Tragebalken 4 des ersten Statorabschnittes 31 liegen radial außen, während die Tragebalken 5 des zweiten Statorabschnittes 32 radial innen angeordnet sind.

An den Enden der Tragebalken 4, 5 sind Auskragungen 41, 51 vorgesehen. Die Auskragungen 41, 51 weisen eine in Richtung des Rotors 2 weisende Dicke d und in Umfangsrichtung des elektromechanischen Wandlers 1a eine Breite b auf. Sie sind in radialer Richtung r jeweils entgegengesetzt ausgerichtet. Die Auskragungen 41 weisen radial nach innen und die Auskragungen 51 radial nach außen. Die Auskragungen 41, 51 besitzen ferner ebene, dem Rotor 2 zugewandte Stirnflächen, die die magnetischen Aktivflächen 42, 52 der Statoren 3, 3' ausbilden. Die magnetischen Aktivflächen 42, 52 weisen eine in radialer Richtung r des elektromechanischen Wandlers 1a verlaufende Länge c auf.

Der radial innen angeordnete Tragebalken 5 ist in einem radialen Abstand zu der Drehachse A des elektromechanischen Wandlers 1a vorgesehen. Der radiale Abstand des Tragebalkens 5 zu der Drehachse A ist dabei größer als die radiale Ausdehnung c der magnetischen Aktivflächen 42, 52 der Auskragungen 41, 51. Beispielsweise kann der radiale Abstand des Tragebalkens 5 zu der Drehachse A des elektromechanischen Wandlers 1a 1,5 bis 10 mal so groß wie die radiale Ausdehnung c der magnetischen Aktivflächen 42, 52 der Auskragungen 41, 51 der Statoren 3, 3' sein. Besonders bevorzugt ist der radiale Abstand des Tragebalkens 5 zu der Drehachse A 1,5 bis 6 mal so groß wie die radiale Ausdehnung c der magnetischen Aktivflächen 42, 52 der Auskragungen 41, 51. In einem zweckmäßigen Ausgestaltung der Erfindung ist der radiale Abstand des Tragebalkens 5 zu der Drehachse A 1,5 bis 3 mal so groß wie die radiale Ausdehnung c der magnetischen Aktivflächen 42, 52 der Auskragungen 41, 51.

Das heißt, bei dem erfindungsgemäßen elektromechanischen Wandler 1a sind genau genommen sowohl der radial außen liegende erste Statorabschnitt 31 als auch der radial innen liegende zweite Statorabschnitt 32 im Vergleich zur Wandlermitte radial außen, einen Wandlerrandbereich ausbildend, vorgesehen.

An den Tragebalken 4 und 5 ist jeweils eine Vielzahl von Auskragungen 41, 51 mit daran befindlichen magnetischen Aktivflächen 42, 52 vorgesehen. Zwischen den Statoren 3, 3' weist entsprechend auch der Rotor 2 eine Vielzahl von den magnetischen Aktivflächen 42, 52 der Statoren 3, 3' gegenüber liegenden Permanentmagneten 21, 22 auf. Hieraus ergibt sich eine hochpolige Anordnung. Der erfindungsgemäße elektromechanische Wandler 1a ist damit für hohe spezifische Drehmomente geeignet.

In den Ausführungsformen von Figur 1 und Figur 2 sind jeweils der Statorrücken 43, der Tragebalken 4 und die Auskragung 41 des ersten Statorabschnittes 31 sowie der Statorrücken 53, der Tragebalken 5 und die Auskragung 51 des zweiten Statorabschnittes 32 einstückig, das heißt, ohne Zwischenluftspalt, ausgebildet.

Die Statorrücken 43, 53 weisen mit den in Richtung des Rotors 2 auskragenden Tragebalken 4, 5 in den in den Figuren 1 und 2 gezeigten Ausführungsbeispielen im Querschnitt eine T-Form auf. Dadurch ergibt sich die Möglichkeit, an den Statorrücken 43, 53 Befestigungsanschlüsse 9 vorzusehen, an welchen die Statoren 3, 3' mit einem anderen Bauteil verbunden werden können.

Sowohl die Auskragungen 41 an dem ersten Statorabschnitt 31 als auch die Auskragungen 51 an dem zweiten Statorabschnitt 32 sind jeweils gleichmäßig voneinander beabstandet an den zugehörigen Tragebalken 4, 5 vorgesehen. Zwischen den Auskragungen 41 und zwischen den Auskragungen 51 sind jeweils nutförmige Aussparungen 44, 54 vorgesehen. Zwischen den Auskragungen 41 und zwischen den Auskragungen 51 ist somit jeweils ein Abstand a vorgesehen, welcher sich typischerweise aufgrund der radialen Anordnung radial nach außen vergrößert. In den Ausführungsformen von Figur 1 und Figur 2 sind die nutförmigen Aussparungen 44, 54 in der dargestellten Draufsicht, also in ihrer radialen Erstreckung, U-förmig, mit zum jeweiligen Tragebalken 4, 5 hin abgerundeten U-Innenecken ausgebildet

Die Auskragungen 41, 51 sind so an den zugehörigen Tragebalken 4, 5 vorgesehen und derart ausgerichtet, dass sie die zwischen den radial außen und den radial innen liegenden Tragebalken 4, 5 des jeweiligen Stators 3, 3' ausgebildete Wicklungsnut 6 zumindest teilweise übergreifen. So sind in den Ausführungsformen von Figur 1 und 2 die Auskragungen 41, 52 in Form von Auskragungszähnen ausgebildet, die den Freiraum für die Wicklungsnut 6 in radialer Richtung r, ausgehend von den jeweiligen Tragebalken 4, 5 überragen.

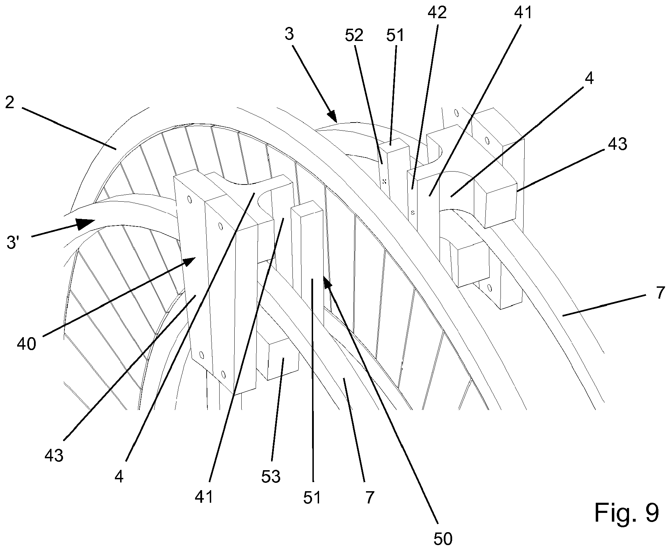

In den Ausführungsformen von Figur 1 und Figur 2 liegen die Enden 45, 55 der sich jeweils in radialer Richtung r versetzt gegenüber stehenden Statorzähne bzw. Auskragungen 41, 51 auf einem Radius bzw. auf einer Linie. Das heißt, die Auskragungszähne verlaufen hier nur bis zu Hälfte der Wicklungsnut 6. Grundsätzlich ist es auch möglich, dass die Auskragungen 41, 51, wie es in den Figuren 8 und 9 gezeigt ist, die Wicklungsnut 6 derart übergreifen, dass sie über der Wicklungsnut 6 fingerartig ineinander greifen, ohne jedoch einander seitlich zu berühren. Andererseits funktioniert der erfindungsgemäße elektromechanische Wandler auch dann, wenn die Auskragungen 41, 51 die Wicklungsanut 6 unvollständig, also in Form von nur über den Rand der Wicklungsnut 6 ragenden Auskragungsstummeln, überlappen.

Die Auskragungszähne haben, wie bereits oben erwähnt, bevorzugt ebene Stirnflächen, die dem Rotor 2 gegenüberstehen. Wie es in Figur 1 durch die Zahnform 42' schematisch angedeutet ist, kann die magnetisch aktive Stirnfläche 42, 52 der Auskragungen 41, 51 auch zu dem Rotor 2 hin abgerundet ausgebildet sein. Die Wölbung der Stirnfläche der Auskragungen 41, 51 kann dabei zu dem Rotor 2 hin konvex, wie in Figur 1 angedeutet, oder auch zu dem Rotor 2 hin konkav ausgebildet sein.

Die Zahnform ist in dem in Figur 1 dargestellten Ausführungsbeispiel des elektromechanischen Wandlers 1a derart ausgebildet, dass die Auskragungen 41, 51 sich zumindest über der Wicklungsnut 6 in axialer Ausrichtung des elektromechanischen Wandlers 1a hinsichtlich ihrer Dicke d keilförmig verringern. Die sich über der Wicklungsnut 6 keilförmig verringernde Dicke d hat den Vorteil, dass insgesamt mehr Platz innerhalb der Wicklungsnut 6 für die Aufnahme von Wicklungen 7 besteht.

Darüber hinaus ist es gemäß dem Ausführungsbeispiel von Figur 1 vorgesehen, dass die Auskragungszähne sich in ihrer radialen Erstreckung r zumindest über der Wicklungsnut 6 trapezförmig hinsichtlich ihrer Breite b verringern. Die sich verringernde Breite b der Auskragungszähne in radialer Richtung r sorgt dafür, dass zwischen den Auskragungen 41, 51 ein geeigneter Luftspalt vorliegt und somit ein magnetischer Kurzschluss zwischen den einander gegenüberstehenden Auskragungen 41, 51 verhindert wird.

Figur 2 zeigt schematisch eine weitere Ausführungsform eines erfindungsgemäßen elektromechanischen Wandlers 1b. Der elektromechanische Wandler 1b ist eine Zweifach-Kaskaden-Anordnung der Ausführungsform des elektromechanischen Wandlers 1a aus Figur 1. Der elektromechanische Wandler 1b weist somit zwei Rotoren 2 auf, wobei beidseitig beider Rotoren 2 Statoren 3, 3' vorgesehen sind. Hinsichtlich der Ausbildung der Rotoren 2 und der Statoren 3, 3' sei an dieser Stelle auf obige Ausführungen zu Figur 1 verwiesen.

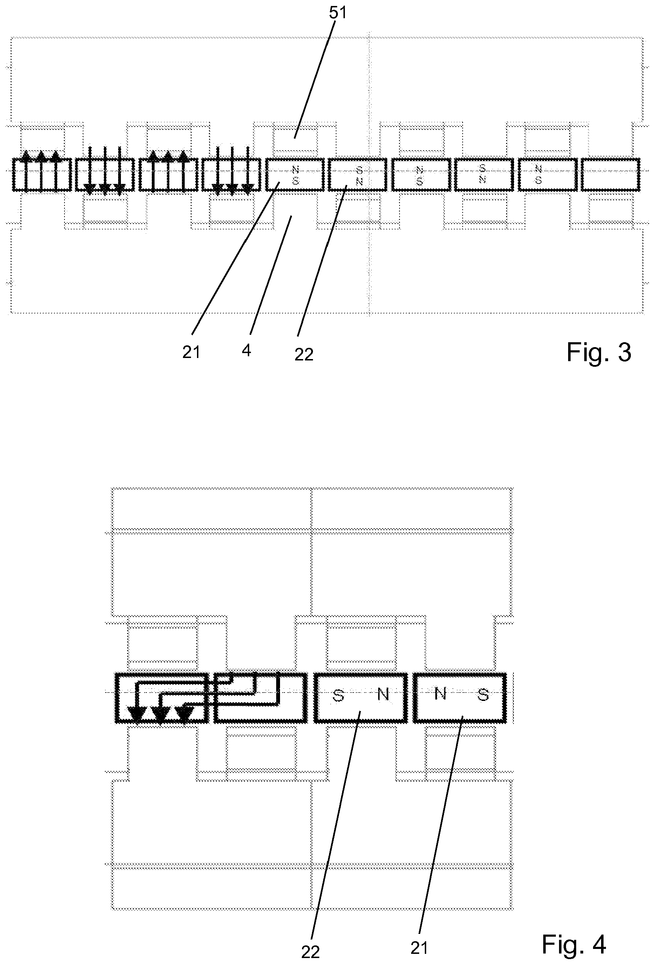

Anders als in den Figuren 1 und 2 können in weiteren Ausführungsformen der vorliegenden Erfindung die Permanentmagnete 21, 22, die in den jeweiligen Rotoren 2 vorgesehen sind, auch derart ausgerichtet werden, dass Nordpole N und Südpole S einander in Umfangsrichtung U des elektromechanischen Wandlers abwechseln. Dies hat den Vorteil, dass sich ein direkter Verlauf des magnetischen Flusses von einem Stator 3 über den Rotor 2 zu dem anderen Stator 3', wie er in Figur 3 schematisch dargestellt ist, ergibt.

Im Vergleich dazu ist in Figur 4 der Verlauf des magnetischen Flusses bei einer Ausführungsform gezeigt, in welcher die Permanentmagnete, ähnlich wie in der Druckschrift EP 2 255 431 B1, so in dem Rotor 2 vorgesehen sind, dass sich die nebeneinander angeordneten Permanentmagneten 21, 22 abstoßen.

Figur 5 zeigt schematisch eine weitere Ausführungsform eines erfindungsgemäßen elektromechanischen Wandlers 1c in einer perspektivischen Ansicht.

Der elektromechanische Wandler 1c weist einen Rotor 2 und zwei beidseitig des Rotors 2 vorgesehene Statoren 3, 3' auf. Der Rotor 2 ist um eine Rotorachse A rotationssymmetrisch ausgebildet und um die Rotorachse A drehbar. Die Statoren 3, 3' sind positionsfest. Jeder der Statoren 3, 3' weist zwei Statorabschnitte 31, 32 auf, welche im Folgenden noch näher erläutert werden. Wie es bereits aus Figur 5 ersichtlich ist, ist jeder dieser Statorabschnitte 31, 32 aus einzelnen Statorklauen 40, 50 zusammengesetzt, die einander abwechselnd die in der Wicklungsnut 6 vorgesehenen Wicklungen 7 von radial außen bzw. von radial innen übergreifen. Jede der Statorklauen 40, 50 weist einen Statorrücken 43 bzw. 53, einen mit dem Statorrücken 43, 53 verbundenen, sich in axialer Richtung A erstreckenden Tragebalken 4, 5 und jeweils an den Tragebalken 4, 5 vorgesehene, sich in radialer Richtung erstreckende Auskragungen 41, 51 auf, welche ebenfalls im Folgenden noch näher erläutert werden.

Figur 6 zeigt den Rotor 2 des elektromechanischen Wandlers 1c aus Figur 5 in einer perspektivischen Draufsicht auf den Rotor 2.

Der Rotor 2 besitzt einen Rotorgrundträger 23 aus einem amagnetischen Material. In dem Rotorgrundträger 23 sind Permanentmagnete 21, 22 vorgesehen. Die Permanentmagnete 21, 22 weisen in Umfangsrichtung U des Rotors 2 abwechselnde Nordpole N und Südpole S auf. Es versteht sich von selbst, dass die jeweils entgegengesetzten Pole zu den in Figur 6 dargestellten Nord- und Südpolen sich auf der jeweiligen Rückseite des Rotors 2 befinden.

In der Ausführungsform von Figur 6 besteht der Rotorgrundträger 23 beispielsweise aus einem faserverstärkten Kunststoff. Die Permanentmagnete 21, 22 sind derart in den Rotorgrundträger 23 eingelassen, dass ihre magnetisch aktiven Oberflächen an den oberen und unteren Scheibenoberflächen des Rotors 2 wirksam sind. Die magnetisch aktiven Oberflächen der Permanentmagnete 21, 22 schließen dabei flächenbündig mit den oberen und unteren Scheibenoberflächen des Rotors 2 ab. Die Zwischenbereiche des Rotorgrundträgers 23 zwischen den in das Rotorgrundträgermaterial integrierten Permanentmagneten 21, 22, das heißt, die zwischen den Permanentmagneten 21, 22 ausgebildeten amagnetischen Stege 24, versteifen den Rotor 2 derart, dass er hohen mechanischen Belastungen ausgesetzt werden kann.

In den Ausführungsformen von Figur 1, 2 und 6 sind die Permanentmagneten 21, 22 jeweils quaderförmig und die Statorpole mit rechteckiger magnetischer Aktivfläche 42, 52 ausgebildet. Dadurch ergibt sich eine einfache und preisgünstige Herstellung. Grundsätzlich ist es jedoch auch möglich, die Permanentmagnete 21, 22 als auch die magnetischen Aktivflächen 42, 52 der Statorpole trapezförmig auszubilden. Dies empfiehlt sich insbesondere bei den Ausführungsformen der vorliegenden Erfindung, in welchen die radiale Ausdehnung der Permanentmagnete 21, 22 bzw. der Statorpole relativ groß ist.

Figur 7 zeigt schematisch und nur zur Demonstration ein Detail des elektromechanischen Wandlers 1c aus Figur 5. In der Darstellung von Figur 7 sind zwei einander gegenüber stehende Statorklauen 40, 50 des elektromechanischen Wandlers 1c dargestellt, wobei die Statorklauen 40, 50 eine Wicklungsnut 6 mit darin eingebrachten Wicklungen 7 übergreifen. In der Darstellung von Figur 7 sind die weiteren, neben den dargestellten Statorklauen 40, 50 vorgesehenen Statorklauen der Übersichtlichkeit halber nicht dargestellt.

Die Statorklaue 40 ist dem ersten Statorabschnitt 31 des Stators 3 oder 3' zuzuordnen. Die Statorklaue 40 weist einen sich in radialer Richtung r erstreckenden Statorrücken 43 auf, der in der Darstellung von Figur 7 unterhalb der Wicklungen 7 liegt. Radial außen erstreckt sich ausgehend von dem Statorrücken 43 in axialer Richtung A des elektromechanischen Wandlers 1c der Tragebalken 4. Von dem Tragebalken 4 erstreckt sich wiederum in radialer Richtung r in Richtung zur Rotorachse A die Auskragung 41. Auf der Stirnfläche der Auskragung 41 ist die magnetische Aktivfläche 42 vorgesehen, welche im Betrieb des elektromechanischen Wandlers 1c dem die Permanentmagneten 21, 22 enthaltenden Rotorbereich des Rotors 2 gegenübersteht.

Die Auskragung 41 weist eine Dicke d in axialer Ausrichtung A sowie eine Breite b in Umfangsrichtung U auf. In bestimmten Ausführungsformen der vorliegenden Erfindung können die Dicke d und/oder die Breite b der Auskragung 41 in Richtung zur Rotorachse A allmählich geringer werden.

Die Statorklaue 40 umgreift die Wicklungen 7 in der Wicklungsnut 6 bügelartig von radial außen. In dem in Figur 7 dargestellten Ausführungsbeispiel bildet die Auskragung 41 der Statorklaue 40 den Nordpol der Statorklaue 40 aus, während der Statorrücken 43 den Südpol S der Statorklaue 40 ausbildet.

Neben der Statorklaue 40 ist die Statorklaue 50 vorgesehen. Die Statorklauen 40, 50 des elektromechanischen Wandlers 1c greifen kammartig ineinander.

Die Statorklaue 50 weist einen sich radial erstreckenden Statorrücken 53 auf, der in der Ansicht von Figur 7 zwischen den Wicklungen 7 und dem Statorrücken 43 der Statorklaue 40 angeordnet ist. Von dem Statorrücken 53 erstreckt sich in axialer Richtung der Tragebalken 51, von welchem wiederum radial nach außen die Auskragung 51 mit der darauf vorgesehenen magnetischen Aktivfläche 52 auskragt.

Die Statorklaue 50 ist entgegengesetzt zu der Statorklaue 40 gepolt. Das heißt, in dem Ausführungsbeispiel von Figur 7 bildet die Auskragung 51 den Südpol S und der Statorrücken 53 den Nordpol N der Statorklaue 50 aus.

Die Statorklauen 40, 50 sind so angeordnet, dass sich in Umfangsrichtung U zwischen den Auskragungen 41, 51 ein Luftspalt 8 ergibt. Der Abstand zwischen den Auskragungen 41, 51 vergrößert sich typischerweise aber nicht notwendigerweise von radial nach außen.

Figur 8 zeigt schematisch den Stator 3 des elektromechanischen Wandlers 1c aus Figur 5 in einer perspektivischen Draufsicht.

Wie es aus Figur 8 ersichtlich ist, sind die an den radial außen liegenden Tragebalken 4 vorgesehenen Auskragungen 41 bezüglich des Auskragungsabstandes a um ein halbes Teilungsmaß gegenüber den jeweils an den radial innen liegenden Tragebalken 5 vorgesehenen Auskragungen 51 winkelversetzt. Auf diese Weise können die Auskragungen 41 ungehindert in den Abstand zwischen den benachbarten Auskragungen 51 eingreifen. Umgekehrt können die an den radial innen liegenden Tragebalken 5 vorgesehenen Auskragungen 51 ungehindert in den Abstand zwischen den Auskragungen 41 eingreifen. Dabei ist der Auskragungsabstand a zwischen den Auskragungen 41 beziehungsweise zwischen den Auskragungen 51 deutlich größer als die Breite b der Auskragungen 41, 51.

Die Statorklauen 40, 50 umgreifen die Wicklungsnut 6 mit den darin vorgesehenen Wicklungen 7. Obwohl in den Ausführungsbeispielen jeweils zwei Wicklungen 7 dargestellt sind, versteht es sich von selbst, dass grundsätzlich auch eine Wicklung 7 oder mehr als zwei Wicklungen 7 vorgesehen werden können. Vorzugsweise sind die Wicklungen 7 innen hohle Wicklungen, sodass die Wicklungen 7 von innen, beispielsweise mit einem Kühlfluid, kühlbar sind. Die Wicklungen 7 sind, wie es in Figur 8 schematisch dargestellt ist, an wenigstens einer Seite des Stators 3 geeignet nach außen geleitet, um geeignet elektrisch kontaktiert werden zu können.

Die Auskragungen 41, 51 der Statorklauen 40, 50 umgeben zwar die Wicklungsnut 6, sind jedoch an ihren, den Tragebalken 4, 5 gegenüber befindlichen Auskragungsenden nicht mit dem jeweils zugehörigen Statorrücken 43, 53 verbunden.

Figur 9 zeigt schematisch ein Detail von Figur 8 in einer perspektivischen Seitenansicht auf den Rotor 2 und zwei beidseitig des Rotors 2 vorgesehene Statorklauenpaare. Hier sind ebenfalls, wie in Figur 7, die weiteren Statorklauen 40, 50 der Statoren 3, 3' der Übersichtlichkeit halber weggelassen. Wie es aus Figur 9 ersichtlich ist, sind die magnetischen Aktivflächen 42, 52 der Statorklauen 40, 50 der Statoren 3, 3' jeweils gleich zu dem Rotor 2 beabstandet. Entsprechend ist der Rotor 2 in der Lage, sich zwischen den Statoren 3, 3' ungehindert zu drehen.

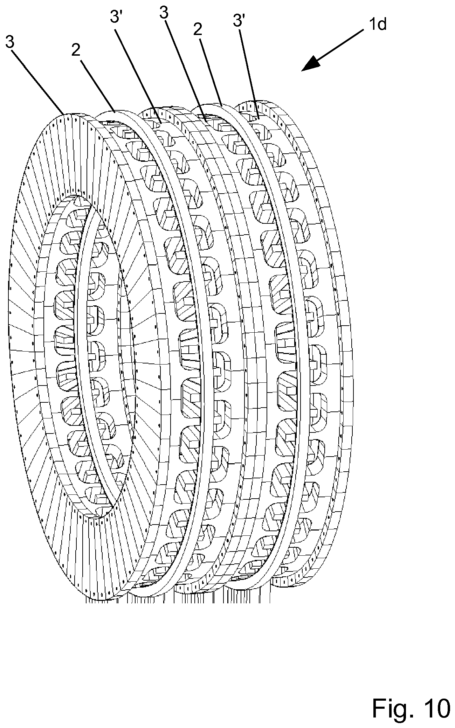

Figur 10 zeigt schematisch eine weitere Ausführungsform eines erfindungsgemäßen elektromechanischen Wandlers 1d mit zwei axial übereinander angeordneten Stator-Rotor-Stator-Anordnungen. Hinsichtlich der Details der Rotoren 2 und der Statoren 3, 3' wird auf die obigen Ausführungen zu den Figuren 5 bis 9 verwiesen.

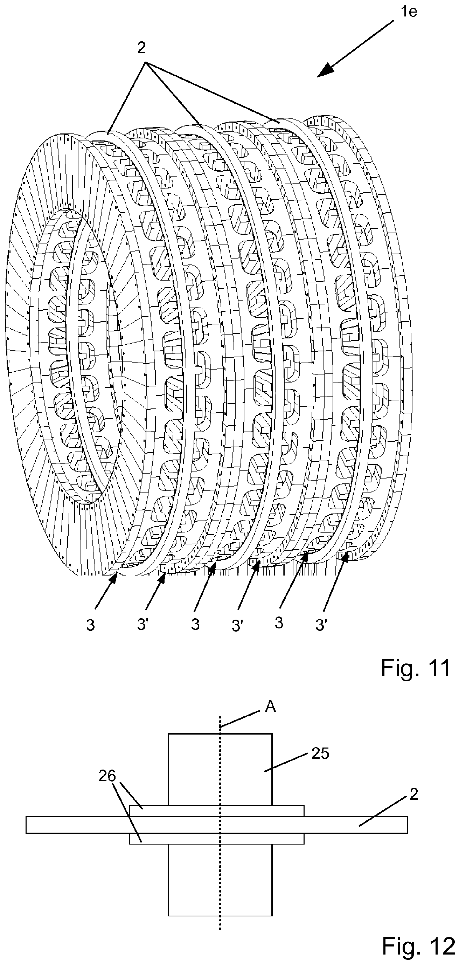

In Figur 11 ist schematisch noch eine weitere Ausführungsform eines erfindungsgemäßen elektromechanischen Wandlers 1e dargestellt. Der elektromechanische Wandler 1e weist eine Dreifach-Kaskaden-Anordnung basierend auf der Ausführungsform des elektromechanischen Wandlers 1c aus Figur 5 auf. Entsprechend besitzt der elektromechanische Wandler 1e drei in axialer Richtung übereinander gestapelte Stator-Rotor-Stator-Anordnungen, zu deren Details auf die obigen Ausführungen bezüglich Figur 5 bis Figur 9 verwiesen wird.

Der elektromechanische Wandler 1a, 1b, 1c, 1d, 1e kann sowohl als Motor als auch Generator verwendet werden. Insbesondere eignet sich der elektromechanische Wandler 1a, 1b, 1c, 1d, 1e als Direktantrieb, welcher mit axial kurzer Baulänge zur Verfügung gestellt werden kann. Der elektromechanische Wandler 1a, 1b, 1c, 1d, 1e weist eine besonders Effizienz auf, wobei hohe spezifische Drehmomente beim Einsatz des elektromechanischen Wandlers 1a, 1b, 1c, 1d, 1e in elektrischen Maschinen erzielbar sind. Ferner zeichnet sich der erfindungsgemäße elektromechanische Wandler 1a, 1b, 1c, 1d, 1e durch eine technologisch vereinfachte Herstellbarkeit und dadurch verringerte Fertigungskosten aus.

Der erfindungsgemäße elektromechanische Wandler 1a, 1b, 1c, 1d, 1e kann, wie es im Stand der Technik bekannt ist, auf verschiedene Weise beschaltet werden.

Bei der Ausführungsform des elektromechanischen Wandlers 1c, der in den Figuren 5 bis 9 dargestellt ist, werden die Wicklungen 7 der Statoren 3, 3' mit zueinander entgegengesetzter elektrischer Polarität beschalten.

In einer günstigen Ausführungsvariante der vorliegenden Erfindung wird der elektromechanische Wandler 1a, 1b, 1c, 1d, 1e 3-phasig unter Verwendung einer Sternpunktschaltung betrieben. Grundsätzlich sind jedoch auch zwei, vier oder auch mehr als vier Phasen beim Betrieb des erfindungsgemäßen elektromechanischen Wandlers 1a, 1b, 1c, 1d, 1e möglich. Außerdem ist es auch denkbar, den elektromechanischen Wandler 1a, 1b, 1c, 1d, 1e mit Dreieckschaltung zu betreiben.

Für einen mehrphasigen Betrieb des erfindungsgemäßen elektromechanischen Wandlers 1a, 1b, 1c, 1d, 1e können in einer in den Figuren nicht gezeigten Ausführungsform dessen Statoren 3, 3' in Umfangsrichtung U des elektromechanischen Wandlers 1a, 1b, 1c, 1d, 1e segmentiert ausgebildet sein.

Ferner sind verschiedene Anordnungen von Wicklungen möglich.

Ein Vorteil in den Figuren 5 bis 11 dargestellten Ausführungsform des elektromechanischen Wandlers 1c, 1d, 1e besteht zudem darin, dass die dargestellten elektromechanischen Wandler 1c, 1d, 1e mit einem optimierten Polteilungsmaß, das heißt einer im Vergleich zum Stand der Technik geringeren Polzahl, zur Verfügung gestellt werden kann, obwohl der erfindungsgemäße elektromechanische Wandler 1c, 1d, 1e eine wenigstens gleich hohe Effizienz wie bekannte Synchronmaschinen aufweist.

Figur 12 veranschaulicht schematisch eine Rotoranordnung einer nach einem Innenläuferprinzip arbeitenden Ausführungsform eines erfindungsgemäßen elektromechanischen Wandlers. Der Rotor 2 ist bei der dieser Ausführungsform an einer um die Drehachse A drehbaren Welle 25 montiert, die beispielsweise eine Hohlwelle sein kann. Die Anbindung des Rotors 2 an die Welle 25 erfolgt mit wenigstens einem Verbindungsflansch 26.

## Patentansprüche

1. Elektromechanischer Wandler (1a, 1b, 1c, 1d, 1e) mit wenigstens einem scheiben- oder ringförmigen Rotor (2), in und/oder auf dem Permanentmagnete (21, 22) konzentrisch strahlenförmig angeordnet sind, und wenigstens zwei beidseitig des Rotors (2) vorgesehenen Statoren (3, 3'), wobei
die Statoren (3, 3') zumindest teilweise aus weichmagnetischem Material gefertigt sind;
jeder Stator (3, 3') einen ersten Statorabschnitt (31) mit radial außen liegenden Tragebalken (4) für dem Rotor (2) gegenüber liegende erste magnetische Aktivflächen (42) des Stators (3, 3') und einen zweiten Statorabschnitt (32) mit radial innen liegenden Tragebalken (5) für dem Rotor (2) gegenüber liegende zweite magnetische Aktivflächen (52) des Stators (3, 3') aufweist;
zwischen diesen Statorabschnitten (31, 32) eine ringförmige Wicklungsnut (6) zur Aufnahme wenigstens einer Wicklung (7) vorgesehen ist;
die Tragebalken (4, 5) jeweils ringförmig angeordnet sind und sich jeweils parallel zur Rotorachse (A) in Richtung des Rotors (2) erstrecken;
die magnetischen Aktivflächen (42, 52) der Statoren (3, 3') Stirnflächen von voneinander gleichmäßig beabstandeten, in Richtung des Rotors (2) von den Tragebalken (4, 5) vorstehenden Auskragungen (41, 51) sind;
die jeweils an den radial außen liegenden Tragebalken (4) vorgesehenen Auskragungen (41) bezüglich des Auskragungsabstandes (a) um ein halbes Teilungsmaß gegenüber den jeweils an den radial innen liegenden Tragebalken (5) vorgesehenen Auskragungen (51) winkelversetzt sind, **gekennzeichnet dadurch, dass** bei wenigstens einem der Statoren (3, 3') die an den radial außen liegenden Tragebalken (4) vorgesehenen Auskragungen (41) und/oder die an den radial innen liegenden Tragebalken (5) vorgesehenen Auskragungen (51) die Wicklungsnut (6) in radialer Ausrichtung (r) wenigstens teilweise übergreifen, sodass die Wicklungsnut (6) zwischen Statorrücken (43, 53), von welchen die Tragebalken (4, 5) gehalten werden, den Tragebalken (4, 5) und den Auskragungen (41, 51) ausgebildet ist, wobei zwischen den Auskragungen (41, 51) jeweils ein sich parallel zur Umfangsrichtung (U) des Rotors (2) erstreckender Luftspalt (8) vorgesehen ist, und der Radius (r), in welchem die radial innen liegenden Tragebalken (5) von der Drehachse (A) des elektromechanischen Wandlers (1a, 1b, 1c, 1d, 1e) beabstandet sind, größer als die radiale Ausdehnung (c) der magnetischen Aktivflächen (42, 52) der Statoren (3, 3') ist.

2. Elektromechanischer Wandler nach Anspruch 1, **dadurch gekennzeichnet, dass** der erste Statorabschnitt (31) und der zweite Statorabschnitt (32) separat voneinander ausgebildete Statorsegmente sind.

3. Elektromechanischer Wandler nach Anspruch 2, **dadurch gekennzeichnet, dass** der erste Statorabschnitt (31) und der zweite Statorabschnitt (32) die Statorrücken (43, 53), die Tragebalken (4, 5) und die Auskragungen (41, 51) aufweisen, wobei die Tragebalken (4, 5) einen geschlossenen Ring ausbilden.

4. Elektromechanischer Wandler nach Anspruch 2, **dadurch gekennzeichnet, dass** der erste Statorabschnitt (31) und der zweite Statorabschnitt (32) unterschiedliche magnetische Eigenschaften aufweisen.

5. Elektromechanischer Wandler nach einem der vorhergehenden Ansprüche, **dadurch gekennzeichnet, dass** die Auskragungen (41, 51) über der Wicklungsnut (6) kammförmig ineinander greifen, ohne einander seitlich zu berühren.

6. Elektromechanischer Wandler nach einem der vorhergehenden Ansprüche, **dadurch gekennzeichnet, dass** die Auskragungen (41, 51) in Form von die Wicklungsnut (6) zumindest teilweise übergreifenden Auskragungszähnen vorgesehen sind, die Auskragungszähne die Wicklungsnut (6) nur teilweise überlappen oder nur so weit überlappen, dass die Enden (45, 55) der versetzt einander gegenüber befindlichen Auskragungszähne auf einem Radius liegen, und die Auskragungszähne eine sich zumindest über der Wicklungsnut (6) keilförmig verringernde Dicke (d) parallel zur Rotorachse (A) aufweisen.

7. Elektromechanischer Wandler nach einem der vorhergehenden Ansprüche, **dadurch gekennzeichnet, dass** die Auskragungen (41, 51) in Form von die Wicklungsnut (6) zumindest teilweise übergreifenden Auskragungszähnen vorgesehen sind, wobei die Auskragungszähne die Wicklungsnut (6) nur teilweise überlappen oder nur so weit überlappen, dass die Enden (45, 55) der versetzt einander gegenüber befindlichen Auskragungszähne auf einem Radius liegen, und die Auskragungszähne eine sich zumindest in ihrer radialen Erstreckung über der Wicklungsnut (6) trapezförmig verringernde Breite (b) aufweisen.

8. Elektromechanischer Wandler nach einem der vorhergehenden Ansprüche, **dadurch gekennzeichnet, dass** die Auskragungen (41, 51) in Form von die Wicklungsnut (6) zumindest teilweise übergreifenden Auskragungszähnen vorgesehen sind, wobei die Auskragungszähne die Wicklungsnut (6) nur teilweise überlappen oder nur so weit überlappen, dass die Enden (45, 55) der versetzt einander gegenüber befindlichen Auskragungszähne auf einem Radius liegen, und die Auskragungszähne zum Rotor (2) hin abgerundet ausgeführt sind, wobei die magnetisch aktiven Flächen (41, 42) der Auskragungszähne ein in Umfangsrichtung (U) des Rotors (2) verlaufendes Wölbungsprofil aufweisen.

9. Elektromechanischer Wandler nach einem der vorhergehenden Ansprüche, **dadurch gekennzeichnet, dass** die Statorrücken (43, 53) mit den in Richtung des Rotors (2) auskragenden Tragebalken (4, 5) im Querschnitt eine T-Form aufweisen.

10. Elektromechanischer Wandler nach einem der vorhergehenden Ansprüche, **dadurch gekennzeichnet, dass** zwischen den Auskragungen (41) und zwischen den Auskragungen (51) jeweils nutförmige Aussparungen (44, 54) vorgesehen sind, wobei die nutförmigen Aussparungen (44, 54) in ihrer radialen Erstreckung U-förmig, mit zum jeweiligen Tragebalken (4, 5) hin abgerundeten U-Innenecken ausgebildet sind.

11. Elektromechanischer Wandler nach einem der Ansprüche 1, 2 oder 4 bis 10, **dadurch gekennzeichnet, dass** sich der erste Statorabschnitt (31) und der zweite Statorabschnitt (32) aus einzelnen Statorklauen (40, 50) zusammensetzen, wobei an jeder der Statorklauen (40, 50) eine der Auskragungen (41, 51) vorgesehen ist, welche die Wicklungsnut (6) abwechselnd von radial außen und von radial innen übergreifen.

12. Elektromechanischer Wandler nach einem der vorhergehenden Ansprüche, **dadurch gekennzeichnet, dass** die Permanentmagneten (21, 22) mit einander in Umfangsrichtung (U) des Rotors (2) abwechselnde Nord- und Südpole (N, S) in und/oder auf dem Rotor (2) angeordnet sind und die elektrische Anschlusspolung der Wicklungen (7) der beidseitig des Rotors (2) vorgesehenen Statoren (3, 3') zueinander entgegengesetzt ist.

13. Elektromechanischer Wandler nach Anspruch 12, **dadurch gekennzeichnet, dass** der Rotor (2) aus einem magnetischen Werkstoff ausgebildet ist und die Permanentmagnete (21, 22) in dem Rotor (2) durch Magnetisierung des magnetischen Werkstoffes ausgebildet sind.

14. Elektromechanischer Wandler nach einem der vorhergehenden Ansprüche, **dadurch gekennzeichnet, dass** die Statoren (3, 3') in Umfangsrichtung (U) des elektromechanischen Wandlers (1a, 1b, 1c, 1d, 1e) segmentiert ausgebildet sind.

15. Elektromechanischer Wandler nach einem der vorhergehenden Ansprüche, **dadurch gekennzeichnet, dass** die radial innen liegenden Tragebalken (5) des Stators eine Hohlwelle um die Drehachse des Rotors (2) ausbilden und der Rotor (2) ringförmig mit einem entsprechend der Größe des Statorinnenhohlraums ausgebildeten Innenloch, also als Hohlwelle, vorgesehen ist, wobei der Innenhohlraum des elektromechanischen Wandlers (1a, 1b, 1c, 1d, 1e) für die Unterbringung eines Getriebes und/oder einer Bremseinrichtung oder für eine Leitungs- und/oder Werkstückzuführung genutzt wird.

## Claims

1. Electromechanical transducer (1a, 1b, 1c, 1d, 1e) comprising at least one disk shaped rotor or annular rotor (2), in and/or on which permanent magnets (21, 22) are arranged in a concentrically radiant manner, and having at least two stators (3, 3'), which are provided at both sides of the rotor (2), wherein
the stators (3, 3') are at least partially of soft magnetic material;
each stator (3, 3') comprises a first stator section (31) with radially outer supporting bars (4) for first magnetic active faces (42) of the stator (3, 3') being opposite the rotor (2) and a second stator section (32) with radially inner supporting bars (5) for second magnetic active faces (52) of the stator (3, 3') being opposite the rotor (2); an annular winding groove (6) for receiving at least one winding (7) is provided between said stator sections (31, 32);
the supporting bars (4, 5) are each arranged in an annular manner and each extend parallel to the rotor axis (A) in the direction of the rotor (2);
the magnetic active faces (42, 52) of the stators (3, 3') are end faces of projections (41, 51) which are equally spaced to one other and which protrude from the supporting bars (4, 5) in the direction of the rotor (2);
the projections (41) being respectively provided on the radially outer supporting bars (4) are offset at an angle in relation to the projections (51) being respectively provided on the radially inner supporting bars (5) in respect of the projection spacing (a) by half a pitch,
**characterized in that**
in at least one of the stators (3, 3'), the projections (41) which are provided on the radially outer supporting bars (4) and/or the projections (51) which are provided on the radially inner supporting bars (5) overlap at least partially over the winding groove (6) in radial direction (r) so that the winding groove (6) is provided between stator backs (43, 53), which hold the supporting bars (4, 5), the supporting bars (4, 5) and the projections (41, 51), wherein an air gap (8) is provided between the projections (41, 51) extending parallel to the circumferential direction (U) of the rotor, (2), respectively,
and
the radius (r), in which the radially inner supporting bars (5) are spaced to the rotation axis (A) of the electromechanical transducer (1a, 1b, 1c, 1d, 1e), is larger than the radial extent (c) of the magnetic active faces (42, 52) of the stators (3, 3').

2. Electromechanical transducer according to claim 1, **characterized in that** the first stator section (31) and the second stator section (32) are stator segments formed separately from each other.

3. Electromechanical transducer according to claim 2, **characterized in that** the first stator section (31) and the second stator section (32) comprise the stator backs (43, 53), the supporting bars (4, 5) and the projections (41, 51), wherein the supporting bars (4, 5) form a closed ring.

4. Electromechanical transducer according to claim 2, **characterized in that** the first stator section (31) and the second stator section (32) have different magnetic properties.

5. Electromechanical transducer according to one of the preceding claims, **characterized in that** the projections (41, 51) interlock in a comb-like manner above the winding groove (6) without touching each other laterally.

6. Electromechanical transducer according to one of the preceding claims, **characterized in that** the projections (41, 51) are provided in form of projection teeth which at least partly overlap the winding groove (6), the projection teeth only partly overlap the winding groove (6) or only overlap as far that the ends (45, 55) of the offset oppositely arranged projection teeth are provided on a radius, and the projection teeth comprise a wedge-shaped decreasing thickness (d), at least over the winding groove (6), parallel to the rotor axis (A).

7. Electromechanical transducer according to one of the preceding claims, **characterized in that** the projections (41, 51) are provided in form of projection teeth which at least partly overlap the winding groove (6), wherein the projection teeth only partly overlap the winding groove (6) or only overlap as far that the ends (45, 55) of the offset oppositely arranged projection teeth are provided on a radius, and the projection teeth comprise a trapezoid decreasing width (b) at least in its radial extension over the winding groove (6).

8. Electromechanical transducer according to one of the preceding claims, **characterized in that** the projections (41, 51) are provided in form of projection teeth which at least partly overlap the winding groove (6), wherein the projection teeth only partly overlap the winding groove (6) or only overlap as far that the ends (45, 55) of the offset oppositely arranged projection teeth are provided on a radius and the projection teeth are rounded towards the rotor (2), wherein the magnetic active faces (41, 42) of the projection teeth comprise an arching profile extending in circumferential direction (U) of the rotor (2).

9. Electromechanical transducer according to one of the preceding claims, **characterized in that** the stator backs (43, 53) form a T-shape in the cross section with the supporting bars (4, 5) projecting in the direction of the rotor (2).

10. Electromechanical transducer according to one of the preceding claims, **characterized in that** groove-shaped recesses (44, 54) are respectively provided between the projections (41) and between the projections (51), wherein the groove-shaped recesses (44, 54) are U-shaped in their radial extension with rounded U-internal corners rounded towards the respective supporting bar (4, 5).

11. Electromechanical transducer according to one of the claims 1, 2 or 4 to 10, **characterized in that** the first stator section (31) and the second stator section (32) are formed of single stator pawls (40, 50), wherein at each stator pawl (40, 50), one of the projections (41, 51) is provided, which alternately overlap the winding groove (6) from radially outside and from radially inside.

12. Electromechanical transducer according to one of the preceding claims, **characterized in that** the permanent magnets (21, 22) with north and south poles (N, S) alternating in circumferential direction (U) of the rotor (2) are arranged in and/or on the rotor (2) and the electrical connection polarity of the windings (7) of the stators (3, 3') being on both sides of the rotor (2) is opposite to one another.

13. Electromechanical transducer according to claim 12, **characterized in that** the rotor (2) is of a magnetic material and the permanent magnets (21, 22) in the rotor (2) are formed by magnetization of the magnetic material.

14. Electromechanical transducer according to one of the preceding claims, **characterized in that** the stators (3, 3') are segmented in circumferential direction (U) of the electromechanical transducer (1a, 1b, 1c, 1d, 1e).

15. Electromechanical transducer according to one of the preceding claims, **characterized in that** the radially inner supporting bars (5) of the stator form a hollow shaft around the rotation axis of the rotor (2) and the rotor (2) has an annular inner hole formed therein which corresponds to a size of an inner hollow space of the stator, wherein the inner hollow space of the electromechanical transducer (1a, 1b, 1c, 1d, 1e) is used as a housing for a drive and/or a brake device or for a cable feed and/or a work piece feed.

## Revendications

1. Convertisseur électromécanique (1a, 1b, 1c, 1d, 1e) avec au moins un rotor en forme de disque ou d'anneau (2), dans et / ou sur lequel des aimants permanents (21, 22) sont disposés de manière concentrique sous forme de rayons, et au moins deux stators (3, 3') prévus sur les deux côtés du rotor (2),
les stators (3, 3') étant faits au moins partiellement en matériau magnétique doux;
chaque stator (3, 3') comprenant une première section de stator (31) avec des barres de support (4) situées radialement à l'extérieur pour des premières surfaces actives magnétiques (42) du stator (3, 3') opposées au rotor (2) et une deuxième section de stator (32) avec des barres de support (5) situées radialement à l'intérieur pour des deuxièmes surfaces actives magnétiques (52) du stator (3, 3') opposées au rotor (2);
une encoche de bobinage (6) en forme d'anneau, destinée à recevoir au moins un bobinage (7), étant prévue entre ces sections de stator (31, 32); les barres de support (4, 5) étant agencées chacune en forme d'anneau et s'étendant chacune parallèlement à l'axe du rotor (A) en direction du rotor (2);
les surfaces actives magnétiques (42, 52) des stators (3, 3') étant des faces frontales de saillies (41, 51) également espacées les unes des autres protubérantes depuis les barres de support (4, 5) en direction du rotor (2);
les saillies (41) prévues aux barres de support (4) situées radialement à l'extérieur étant angulairement décalées d'une demi dimension de pas par rapport aux saillies (51) prévues aux barres de support (5) situées radialement à l'intérieur en ce qui concerne l'espacement (a) des saillies, **caractérisé en ce que**
pour au moins l'un des stators (3, 3') les saillies (41) prévues aux barres de support (4) situées radialement à l'extérieur et / ou les saillies (51) prévues aux barres de support (5) situées radialement à l'intérieur dépassent l'encoche de bobinage (6) en direction radiale (r) au moins partiellement, de sorte que l'encoche de bobinage (6) est formée entre des dos de stator (43, 53), par lesquels les barres de support (4, 5) sont tenues, les barres de support (4, 5) et les saillies (41, 51), un entrefer (8) s'étendant parallèlement par rapport à la direction périphérique (U) du rotor (2) étant prévu entre des saillies (41, 51) respectivement,
et
le radius (r), dans lequel les barres de support (5) situées radialement à l'intérieur sont espacées de l'axe de rotation du convertisseur (1a, 1b, 1c, 1d, 1e), étant supérieur à l'extension radiale (c) des surfaces actives magnétiques (42, 52) des stators (3, 3').

2. Convertisseur électromécanique selon la revendication 1, **caractérisé en ce que** la première section de stator (31) et la deuxième section de stator (32) sont des segments de stator formés séparément l'un de l'autre.

3. Convertisseur électromécanique selon la revendication 2, **caractérisé en ce que** la première section de stator (31) et la deuxième section de stator (32) comprennent les dos de stator (43, 53), les barres de support 4, 5) et les saillies (41, 51), les barres de support (4, 5) formant un anneau fermé.

4. Convertisseur électromécanique selon la revendication 2, **caractérisé en ce que** la première section de stator (31) et la deuxième section de stator (32) présentent des caractéristiques magnétiques différentes.

5. Convertisseur électromécanique selon l'une des revendications précédentes, **caractérisé en ce que** les saillies (41, 51) s'engrènent en forme de peigne sur l'encoche de bobinage (6) sans se toucher latéralement.

6. Convertisseur électromécanique selon l'une des revendications précédentes, **caractérisé en ce que** les saillies (41, 51) sont prévues en forme des dents de saillies protubérants sur l'encoche de bobinage (6) au moins partiellement, les dents de saillies chevauchant l'encoche de bobinage (6) seulement partiellement ou seulement jusqu'au point que les extrémités (45, 55) des dents de saillie situés décalés et opposés les uns par rapport aux autres se trouvent sur un radius, et les dents de saillie présentent une épaisseur (d) décroissante en forme de coin au moins sur l'encoche de bobinage (6) parallèlement par rapport à l'axe (A) du rotor.

7. Convertisseur électromécanique selon l'une des revendication précédentes, **caractérisé en ce que** les saillies (41, 51) sont prévues en forme des dents de saillie dépassant l'encoche de bobinage (6) au moins partiellement, les dents de saillies chevauchant l'encoche de bobinage (6) seulement partiellement ou seulement jusqu'au point que les extrémités (45, 55) des dents de saillie situés décalés et opposés les uns par rapport aux autres se trouvent sur un radius, et les dents de saillie présentent une largeur (b) décroissante en forme trapézoïdale au moins en son extension radiale sur l'encoche de bobinage (6).

8. Convertisseur électromécanique selon l'une des revendication précédentes, **caractérisé en ce que** les saillies (41, 51) sont prévues en forme des dents de saillie dépassant l'encoche de bobinage (6) au moins partiellement, les dents de saillies chevauchant l'encoche de bobinage (6) seulement partiellement ou seulement jusqu'au point que les extrémités (45, 55) des dents de saillie situés décalés et opposés les uns par rapport aux autres se trouvent sur un radius, et les dents de saillie sont formées arrondies vers le rotor (2), les surfaces actives magnétiques (41, 42) présentant un profilé de courbure arrangé en direction périphérique (U) du rotor (2).

9. Convertisseur électromécanique selon l'une des revendications précédentes, **caractérisé en ce que** les dos de stator (43, 53) présentent une forme de T en coupe transversale avec les barres de support (4, 5) protubérantes en direction du rotor (2).

10. Convertisseur électromécanique selon l'une des revendications précédentes, **caractérisé en ce que** des échancrures (44, 54) sont prévus entre les saillies (41) et les saillies (51) respectivement, les échancrures étant formées en forme de U avec des coins dedans arrondis en forme de U vers la barre de support (4, 5) respectivement.

11. Convertisseur électromécanique selon l'une des revendications 1, 2 ou 4 à 10, **caractérisé en ce que** la première section de stator (31) et la deuxième section de stator (32) se composent des clabots de stator (40, 50) individuels, une des saillies (41, 51) étant prévue sur chacune des clabots de stator (40, 50), qui dépassent l'encoche de bobinage (6) de manière alternante de radialement à l'extérieur et de radialement à l'intérieur.

12. Convertisseur électromécanique selon l'une des revendications précédentes, **caractérisé en ce que** les aimants permanents (21, 22) sont arrangés dans et / ou sur le rotor (2) avec des pôles nord et sud (N, S) alternants en direction périphérique (U) du rotor (2), et que la polarité électrique du raccordement des bobinages (7) des stators (3, 3') aux deux côtés du rotor (2) s'opposent.

13. Convertisseur électromécanique selon la revendication 12, **caractérisé en ce que** le rotor (2) est formé d'un matériau magnétique et les aimants permanents (21, 22) dans le rotor (2) sont formés par aimantation du matériau magnétique.

14. Convertisseur électromécanique selon l'une des revendications précédentes, **caractérisé en ce que** les stators (3, 3') sont formés de façon segmentée en direction périphérique (U) du convertisseur électromécanique (1a, 1b, 1c, 1d, 1e).

15. Convertisseur électromécanique selon l'une des revendications précédentes, **caractérisé en ce que** les barres de support (5) du stator situées radialement à l'intérieur forment un arbre creux autour de l'axe de rotation du rotor (2) et le rotor (2) est prévu en forme d'anneau avec un trou intérieur correspondant aux dimensions de la cavité intérieur du stator, c.à.d. comme arbre creux, la cavité intérieur du convertisseur électromécanique (1a, 1b, 1c, 1d, 1e) étant utilisée pour le placement d'un entraînement et / ou d'un dispositif de freinage ou pour une amenée des câbles ou des pièces à travailler.
